# EUROPÄISCHE PATENTSCHRIFT

(11) **EP 1 106 783 B1**
(45) Veröffentlichungstag und Bekanntmachung des Hinweises auf die Patenterteilung: **04.10.2006**
(21) Anmeldenummer: 00119276.4
(22) Anmeldetag: 06.09.2000
(51) Int. Cl.: F01D 5/28, F01D 5/14, B23P 17/00, B21D 49/00

(54) **Verfahren zum Herstellen einer Schaufel einer Strömungsmaschine**
Method to produce a turbomachine blade
Méthode de production d'une aube de turbomachine

(30) Priorität: 10.12.1999 DE 19959598
(43) Veröffentlichungstag der Anmeldung: 13.06.2001
(73) Patentinhaber: Rolls-Royce Deutschland Ltd & Co KG, 15827 Dahlewitz (DE)
(72) Erfinder: Schreiber, Karl, 15806 Mellensee (DE)
(74) Vertreter: Weber, Joachim

(56) Entgegenhaltungen:
- GB-A- 2 154 286
- US-A- 3 637 325
- US-A- 4 301 584
- US-A- 4 629 397
- US-A- 5 248 242
- US-A- 5 605 441
- US-A- 5 692 881

## Beschreibung

Die Erfindung betrifft ein Verfahren zum Herstellen einer Schaufel einer Strömungsmaschine, insbesondere eines Gasturbinen-Triebwerks, die aus einer metallischen Hüllstruktur sowie einer innerhalb dieser vorgesehenen und mit der Hüllstruktur geeignet verbundenen Tragstruktur aus einem Verbundwerkstoff besteht. Zum technischen Umfeld wird neben der DE 196 27 860 C1 insbesondere auf die US 3,699,623 sowie auf die US 5 692 881 verwiesen.

Verbundwerkstoffe oder sog. Composits, d.h. insbesondere Faserverbundwerkstoffe mit polymerer und metallischer Matrix, werden auf breiter Basis zur Fertigung von technischen Bauteilen eingesetzt. Hauptmotivation der Anwendung ist in der Regel deren günstiges Gewichts-Festigkeitsverhältnis. Häufig jedoch können die Oberflächeneigenschaften dieser Verbundwerkstoffe den gestellten Anforderungen nicht genügen, so daß auf die Oberfläche des aus diesem Verbundwerkstoff gefertigten Bauteiles eine bspw. metallische Schutzschicht aufgebracht werden muß. Dabei sind oftmals die stofflichen und physikalischen Eigenschaften dieser Schutzschicht und des Verbundwerkstoffes sehr unterschiedlich, so daß die Verbindung zwischen diesen beiden Bauteil-Komponenten, nämlich das sog. Interface, einen Schwachpunkt dieses Gesamtverbundes darstellt.

In der eingangs zweitgenannten US 3,699,623 ist ein Herstellverfahren nach dem Oberbegriff des Anspruchs 1 beschrieben, wobei um eine aus einem mit Metallfasern verstärkten Verbundwerkstoff hergestellte Tragstruktur eine metallische Hüllstruktur aus Titan gelegt wird. Zwischen der Hüllstruktur und der Tragstruktur wird dabei ein Diffusionsverbund gebildet. Dieses Herstellverfahren ist folglich nur bei Verwendung von Metallmatrix-Verbundwerkstoffen anwendbar und führt darüberhinaus zu dauerhaft nur unzureichend festen Verbindungen zwischen der Hüllstruktur und der sog. Tragstruktur.

In der eingangs erstgenannten DE 196 27 860 C1 ist ein weiteres Herstellverfahren nach dem Oberbegriff des Anspruchs 1 beschrieben, wobei auf die Oberfläche der aus einem faserverstärkten Kunststoff bestehenden Tragstruktur ein aus metallischen Fasern oder Fäden gebildetes Metall-Filz-Gewebe aufgelegt wird, welches mit der Kunststoff-Tragstruktur über das gleiche Kunstharzbindemittel verbunden ist. Die hiermit erzielbare mechanische, quasi formschlüssige Verbindung soll zu einer erhöhten mechanischen Belastbarkeit der Oberfläche der solchermaßen hergestellten Schaufel führen, jedoch ist hiermit keine geschlossene Oberfläche erreichbar, die demzufolge auch keine homogenen Eigenschaften aufweisen kann.

Zusammenfassend ist derzeit kein Verfahren bekannt, mit Hilfe dessen eine hochbeanspruchbare Verbindung zwischen einer metallischen Deckschicht bzw. der sog. Hüllstruktur, die sowohl korrosiven wie mechanischen Schutz bietet, und einer sich innerhalb dieser befindenden Tragstruktur aus einem Verbundwerkstoff hergestellt werden kann. Mit der vorliegenden Erfindung soll nun ein derartiges Verfahren aufgezeigt werden (=Aufgabe der vorliegenden Erfindung).

Die Lösung dieser Aufgabe ist dadurch gekennzeichnet, daß auf ein die Hüllstruktur bildendes Blech ein Metall-Filz-Gewebe aufgeschweißt oder aufgelötet wird, wonach diese Blech-Gewebe-Einheit durch Hydroformen oder ein Innenhochdruck-Umformverfahren zur Schaufel-Hüllstruktur geformt wird, und daß danach der die Tragstruktur bildende Verbundwerkstoff in den Hohlraum der Hüllstruktur eingebracht wird. Vorteilhafte Weiterbildungen sind Inhalt der Unteransprüche; insbesondere ist hierin auch eine nach dem erfindungsgemäßen Verfahren hergestellte, bevorzugte Schaufel einer Strömungsmaschine angegeben.

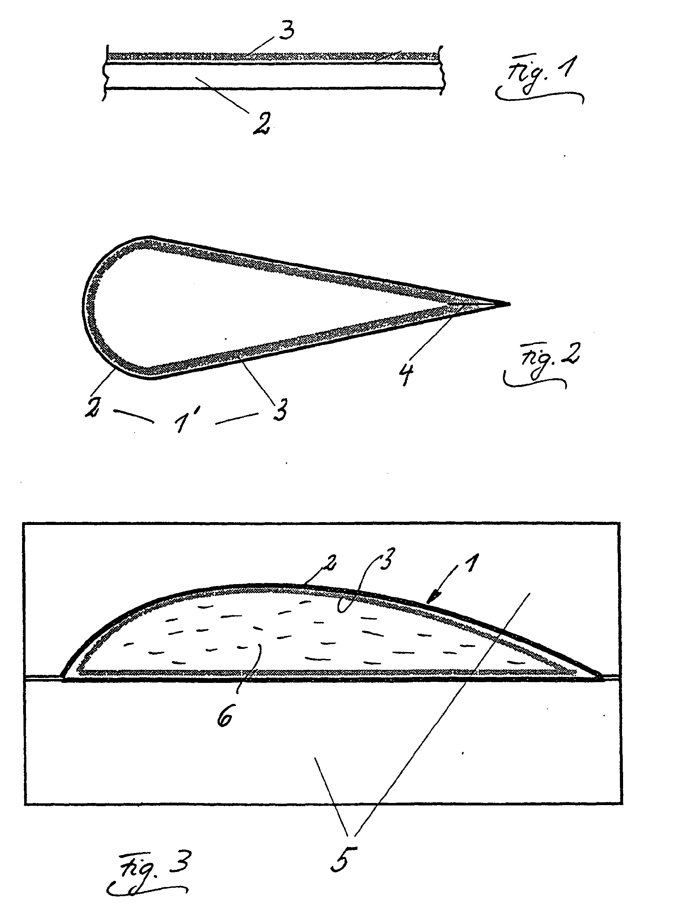

Die nähere Erläuterung erfolgt des besseren Verständnisses wegen unter Bezugnahme auf die beigefügten Prinzipskizzen, wobei ausdrücklich darauf hingewiesen sei, daß dies keine Beschränkung auf das lediglich vereinfacht dargestellte bevorzugte Ausführungsbeispiel bedeutet. In den **Figuren 1 - 3** sind dabei aufeinander folgende Verfahrensschritte dargestellt.

Im ersten erfindungsgemäßen Verfahrensschritt (vgl. **Fig.1**) wird auf ein geeignet dimensioniertes Blech 2, aus welchem später die Hüllstruktur 1 einer Schaufel einer Strömungsmaschine gebildet wird (vgl. hierzu vorab **Fig.3**) ein Metall-Filz-Gewebe 3 aufgeschweißt oder aufgelötet. Bei diesem Metall-Filz-Gewebe muß es sich dabei nicht um ein exakt gestricktes Gewebe handeln, sondern es kann auch eine Art eines metallischen Filz-Gewirkes sein, wenn dieses nur mit ausreichender Festigkeit mit dem Blech 2 verlötet oder verschweißt werden kann.

Gemäß **Fig.2** wird die so gebildete sog: Blech-Gewebe-Einheit 1', bestehend aus dem Blech 2 sowie dem darauf befestigten Metall-Filz-Gewebe 3, zu einem der fertigen Hüllstruktur 1 bereits ähnlichen Hohlkörper vorgeformt, der im Querschnitt dargestellt ist und für den ebenfalls die Bezugsziffer 1' verwendet wird. In diesem Vorformporzeß wird das Blech 2 quasi gefaltet, und zwar derart, daß im ebenen Blech 2 einander gegenüberliegende Randkanten aufeinander zum Liegen kommen, die dann bspw. über eine Roll-Schweißnaht 4 miteinander verbunden werden. Selbstverständlich darf bei diesem Quasi-Faltprozeß im sog. Radiusbereich des Hohlkörpers 1' keine Falz-Knicklinie entstehen. Wie ersichtlich erfolgt dieser Quasi-Faltprozeß derart, daß sich anschließend das Metall-Filz-Gewebe 3 im Innenraum des Hohlkörpers 1' befindet.

In **Fig.3** ist u.a. die darauf folgende erfindungsgemäße Umformung dieses Hohlkörpers 1' zur Hüllstruktur 1 dargestellt. Hierfür wird der Hohlkörper 1' in den Formhohlraum eines geeigneten teilbaren Formwerkzeuges 5 eingelegt und anschließend daran durch ein Innenhochdruck-Umformverfahren in die gewünschte Form der Hüllstruktur 1 gebracht. Bei einem derartigen Innenhochdruck-Umformverfahren, zu welchem auch das bekannte Hydroformen zählt, wird der Innenraum des Hohlkörpers 1' mit hohem Druck (insbesondere durch Befüllung mit einem geeigneten Fluid) beaufschlagt, so daß die Hohlkörper-Wand gegen die Formhohlraumwand des Formwerkzeuges 5 gedrückt wird und dadurch in die gewünschte Form gepreßt wird. Besonders vorteilhaft ist hier die Anwendung des an sich bekannten Innenhochdruck-Umformens deshalb, weil hierbei das im Innenraum des Hohlkörpers 1' auf der Innenseite des Bleches 2 aufliegende Metall-Filz-Gewebe 3 nicht beschädigt wird. Insbesondere bleibt hierbei die im ersten Verfahrensschritt hergestellte Verbindung zwischen dem Blech 2 und dem Metall-Filz-Gewebe 3 erhalten.

Nach erfolgter Umformung der Blech-Gewebe-Einheit 1' zur Hüllstruktur 1 wird erfindungsgemäß der die Tragstruktur 6 bildende Verbundwerkstoff in den Hohlraum der Hüllstruktur 1 eingebracht. Dabei wird dieser Hohlraum vollständig mit dem Verbundwerkstoff ausgefüllt, so daß der Verbundwerkstoff auch an die Innenseite des Bleches 2 gelangt und dabei das Metall-Filz-Gewebe 3 durchdringt. Das Metall-Filz-Gewebe 3, das wie bereits erwähnt mit dem Blech 2 verlötet oder verschweißt ist, wird auf diese Weise sozusagen formschlüssig in den Verbundwerkstoff bzw. in die daraus gebildete Tragstruktur 6 eingegossen. Daß somit ein inniger Verbund zwischen der Tragstruktur 6 sowie der Hüllstruktur 1 bzw. dem Blech 2 hergestellt wird, ist offensichtlich. Das durch die Hüllstruktur 1 sowie durch die Tragstruktur 6 gebildete Bauteil, nämlich die dargestellte Schaufel einer Strömungsmaschine, insbesondere eines Gasturbinen-Triebwerks, zeichnet sich somit durch höchste Stabilität aus. Die Verbindung zwischen der Tragstruktur 6 und der Hüllstruktur 1 ist innig und praktisch unlösbar, die Tragstruktur 6 verleiht diesem Bauteil die ausreichende Steifigkeit und die Hüllstruktur 1 schützt den Verbundwerkstoff der Tragstruktur 6 vor schädlichen äußeren Einwirkungen.

Mit dem soweit beschriebenen Verfahren können unterschiedlichste Schaufeln bzw. Schaufelformen hergestellt werden. Dabei können als Verbundwerkstoffe neben überhaupt nicht faserverstärkten Werkstoffen sowohl kurzfaserverstärkte Werkstoffe mit polymerer und/oder metallischer Matrix zum Einsatz kommen, als auch mit Langfasern verstärkte Verbundwerkstoffe. Stets empfiehlt es sich jedoch, die Befüllung der Hüllstruktur 1, deren Blechlage im übrigen eine Wandstärke in der Größenordnung von 0,1mm bis 2 mm aufweisen kann, direkt im Formwerkzeug 5, in dem die Hüllstruktur 1 zuvor in ihre Sollform gebracht wurde, vorzunehmen. Jegliche unerwünschte Verformung der Hüllstruktur 1 ist hierdurch ausgeschlossen. Somit wird vorgeschlagen, zur Erzeugung einer mit Langfasern verstärkten Tragstruktur 6 nach der Verformung der Hüllstruktur 1 zunächst in deren Hohlraum eine (figürlich nicht dargestellte) Faserstruktur einzulegen und anschließend daran das Verbundmaterial bevorzugt durch Hochdruck-Infiltration einzubringen. Zur Herstellung unverstärkter oder kurzfaserverstärkter Bauteile kann die vorgefertigte Hüllstruktur im Formwerkzeug 5 bspw. nach dem Spritzgußverfahren mit kurzfaser- oder partikelverstärktem oder unverstärktem Kunststoff oder Metall befüllt werden.

Was die Materialauswahl für die Hüllstruktur 1 bzw. genauer für das Blech 2 betrifft, so kann diese metallische Schutzhülle für die Tragstruktur 6 aus unterschiedlichen metallischen Werkstoffen hergestellt werden, da das vorgeschlagene Innenhochdruck-Umformen sehr werkstoffschonend ist, so daß auch schwierig umformbare Werkstoffe für dieses Verfahren verwendet werden können. Aufgrund der typischen Material-Anforderungen kommen insbesondere Titan-, Nickel- und Kupferwerkstoffe sowie nichtrostende austenitische Stähle in Frage.

Ein zusätzlicher Vorteil des erfindungsgemäßen Herstellverfahrens besteht im übrigen darin, daß durch das Innenhochdruck-Umformen in einem geeigneten Formwerkzeug 5 hinsichtlich ihrer Außenkontur exakt der gewünschten Sollform entsprechende Bauteile bzw. Hüllstrukturen 1 gefertigt werden können, deren Hohlraum lediglich noch mit dem die Tragstruktur 6 bildenden Verbundmaterial befüllt werden muß, wonach das bereits fertige Bauteil formgenau vorliegt. Das erfindungsgemäße Verfahren erlaubt also die endkonturgenaue Herstellung eines Composite-Bauteils mit festhaftender, metallischer Oberfläche als mechanischem sowie als Korrosionsschutz.

Herstellbar ist hiermit bspw. eine sog. MMC-Fan-Schaufel, d.h. ein komplettes Verdichter-Laufrad mit Laufschaufeln aus einem Metallmatrix-Verbundwerkstoff, jedoch auch eine sog. PMC-Fan-Schaufel, bei welchem anstelle Magnesium ein geeignetes Kunststoffmaterial infiltriert wird. Stets erhält man aufgrund des Metall-Filz-Gewebes 3 eine hochbelastbare Anbindung zwischen dem die Tragstruktur 6 bildenden Composite bzw. Verbundmaterial und der Hüllstruktur 1 bzw. der äußeren Blechhülle. Letztere kann auf einfache Weise und dabei äußerst materialschonend zusammen mit dem Metall-Filz-Gewebe 3 nach einem Innenhochdruck-Umformverfahren in die gewünschte Form gebracht werden. Direkt anschließend daran kann die Hüllen- und Faserinfiltration in einem Arbeitsschritt erfolgen. Möglich ist die Herstellung äußerst maßhaltiger reproduzierbarer Bauteile. Dabei besitzt dieses Herstellverfahren gegenüber heutigen Lösungen einen stark reduzierten Anteil an Handarbeit und ist somit weitestgehend automatisierbar.

Es lassen sich mit diesem Verfahren aber auch PMC-Vanes, d.h. Leitschaufeln, die aus einem Polymer-Matrix-Composite bestehen, auf besonders kostengünstige Weise mit geringem Gewicht herstellen. Das Außenprofil eines Vanes kann somit durch Hydroumformung geformt werden und dessen Hohlraum kann bspw. im Spritzgußverfahren mit thermoplastischem Kurzfaser-PMC befüllt werden, oder alternativ in Abhängigkeit von den Festigkeitsanforderungen, mit unverstärktem Kunststoff. So kann bspw. das sog. Fan-OGV eines Gasturbinen-Triebwerkes eine Hülle, d.h. ein Hüll-Blech 2 aus austenitischem Chrom-Nickel-Stahl und eine Tragstruktur 6 aus kohlenstoffkurzfaserverstärktem PEEK aufweisen, wobei noch darauf hingewiesen sei, daß selbstverständlich eine Vielzahl von Details durchaus abweichend von obigen Erläuterungen gestaltet sein kann, ohne den Inhalt der Patentansprüche zu verlassen.

## Patentansprüche

1. Verfahren zum Herstellen einer Schaufel einer Strömungsmaschine, insbesondere eines Gasturbinen-Triebwerks, die aus einer metallischen Hüllstruktur (1) sowie einer innerhalb dieser vorgesehenen und mit der Hüllstruktur (1) geeignet verbundenen Tragstruktur (6) aus einem Verbundwerkstoff besteht,
**dadurch gekennzeichnet, daß** auf ein die Hüllstruktur (1) bildendes Blech (2) ein Metall-Filz-Gewebe (3) aufgeschweißt oder aufgelötet wird, wonach diese Blech-Gewebe-Einheit (1') durch Hydroformen oder ein Innenhochdruck-Umformverfahren zur Schaufel-Hüllstruktur (1) geformt wird, und daß danach der die Tragstruktur (6) bildende Verbundwerkstoff in den Hohlraum der Hüllstruktur (1) eingebracht wird.

2. Herstellverfahren nach Anspruch 1,
**dadurch gekennzeichnet, daß** bei Verwendung eines durch Langfasern verstärkten Verbundwerkstoffes zunächst eine Faserstruktur in die Schaufel-Hüllstruktur (1) eingelegt wird und danach das Verbundmaterial durch Infiltration eingebracht wird, wobei sich die Hüllstruktur (1) in einem Formwerkzeug (5), in welchem das besagte Umformen durch Hydroformen oder nach einem Innenhochdruck-Umformverfahren erfolgt, befindet.

3. Herstellverfahren nach Anspruch 1,
**dadurch gekennzeichnet, daß** bei Verwendung eines nicht faserverstärkten oder durch Kurzfasern verstärkten Verbundwerkstoffes dieses Verbundmaterial in die sich in einem Formwerkzeug (5), in welchem das besagte Umformen durch Hydroformen oder nach einem Innenhochdruck-Umformverfahren erfolgt, befindende Hüllstruktur (1) eingebracht wird.

4. Schaufel einer Strömungsmaschine, hergestellt nach einem Verfahren nach einem der vorangegangenen Ansprüche,
**dadurch gekennzeichnet, daß** die Hüllstruktur (1) aus einem Titanblech oder einem Nickelblech oder einem Kupferblech oder einem austenitischen Stahlblech besteht.

## Claims

1. Process for the manufacture of a blade of a turbomachine, in particular of a gas-turbine engine, which consists of a metallic enveloping structure (1) and a supporting structure (6) in a composite material which is inside of and suitably joined to the enveloping structure (1) **characterized in that** a metal-felt weave (3) is welded or soldered/brazed to a sheet (2) making up the enveloping structure (1), with the sheet-weave-assembly (1') being thereupon shaped by way of hydroforming or an internal high-pressure forming process to provide the enveloping structure of the blade/vane (1), and **in that** the composite material making up the supporting structure (6) is subsequently introduced into the cavity of the enveloping structure (1).

2. Manufacturing process in accordance with Claim 1, **characterized in that**, when a long-fiber reinforced composite material is used, a fiber structure is first placed into the blade enveloping structure (1) and the composite material is subsequently introduced by infiltration, this enveloping structure (1) being in a mould (5) in which the said shaping by way of hydroforming or an internal high-pressure forming process takes place.

3. Manufacturing process in accordance with Claim 1, **characterized in that**, when a non-fiber reinforced or short-fiber reinforced composite material is used, this composite material is introduced into the enveloping structure (1), this enveloping structure (1) being in a mould (5) in which the said shaping by way of hydroforming or an internal high-pressure forming process takes place.

4. Blade/vane of a turbomachine manufactured to a process in accordance with one of the preceding Claims, **characterized in that** the enveloping structure (1) is made of titanium sheet or nickel sheet or copper sheet or austenitic steel sheet.

## Revendications

1. Procédé pour fabriquer une aube d'une machine à écoulement, en particulier d'un moteur à turbine à gaz, aube constituée d'une structure enveloppante métallique (1) ainsi que d'une structure portante (6) en matériau composite prévue à l'intérieur de la structure enveloppante et reliée à celle-ci de manière appropriée, **caractérisé en ce qu'**un tissu métallique feutré (3) est soudé ou brasé sur une tôle (2) formant la structure enveloppante (1), sachant que cette unité tôle-tissu (1'), est formée ensuite comme structure enveloppante (1) d'aube par hydroformage ou par un procédé de formage par haute pression interne, et qu'ensuite, le matériau composite formant la structure portante (6) est introduit dans la cavité de la structure enveloppante (1).

2. Procédé de fabrication selon la revendication n° 1, **caractérisé en ce qu'**en cas d'utilisation d'un matériau composite renforcé par des fibres longues, une structure fibreuse est d'abord placée dans la structure enveloppante (1) d'aube et qu'ensuite le matériau composite est introduit par infiltration, sachant que la structure enveloppante (1) se trouve dans un outil de formage (5) où a lieu ladite transformation par hydroformage ou selon un procédé de formage par haute pression interne.

3. Procédé de fabrication selon la revendication n° 1, **caractérisé en ce qu'**en cas d'utilisation d'un matériau composite non renforcé ou renforcé par des fibres courtes, ce matériau composite est introduit dans la structure enveloppante (1), qui se trouve dans un outil de formage (5) où a lieu ladite transformation par hydroformage ou selon un procédé de formage par haute pression interne.

4. Aube d'une machine à écoulement fabriquée selon un procédé conformément à une des revendications ci-dessus, **caractérisée en ce que** la structure enveloppante (1) est constituée d'une tôle de titane, de nickel ou de cuivre, ou bien d'une tôle d'acier austénitique.
